(19) Europäisches Patentamt
European Patent Office
Office européen des brevets

(11) EP 3 733 773 A1

(12) EUROPEAN PATENT APPLICATION

(43) Date of publication:
04.11.2020 Bulletin 2020/45

(51) Int Cl.:
C08L 69/00 (2006.01)          C08L 33/12 (2006.01)
C08L 51/04 (2006.01)

(21) Application number: 20174987.6

(22) Date of filing: 03.08.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 01.09.2016 JP 2016170899

(62) Document number(s) of the earlier application(s) in
accordance with Art. 76 EPC:
17846030.9 / 3 508 531

(71) Applicant: Mitsubishi Chemical Corporation
Chiyoda-ku
Tokyo 100-8251 (JP)

(72) Inventors:
• AOKI, Yutaka
Tokyo, Tokyo 100-8251 (JP)

• NIINO, Hiroshi
Tokyo, 100-8251 (JP)
• MATSUOKA, Shinji
Tokyo, Tokyo 100-8251 (JP)
• NODONO, Mitsufumi
Tokyo, Tokyo 100-8251 (JP)
• UEDA, Masahiro
Tokyo, Tokyo 100-8251 (JP)

(74) Representative: Ter Meer Steinmeister & Partner
Patentanwälte mbB
Nymphenburger Straße 4
80335 München (DE)

Remarks:
15-05-2020 as a divisional application to the
application mentioned under INID code 62.

(54) POLYCARBONATE RESIN COMPOSITION AND MOLDED BODY THEREOF

(57) A polycarbonate resin composition having good impact resistance and also having excellent fluidity and surface hardness is provided. The polycarbonate resin composition, comprising: a polycarbonate resin (A), a poly(methyl methacrylate) (B), and a rubber-containing graft polymer (C) comprising a vinyl monomer grafted to a rubbery polymer, wherein the poly(methyl methacrylate) (B) comprises 85 to 100 mass% of a methyl methacrylate unit, and the value B/C is 2.0 to 15.0 (where B/C = parts by mass of poly(methyl methacrylate) (B) / parts by mass of rubber-containing graft polymer (C)).

EP 3 733 773 A1

**Description**

Technical Field

The present invention relates to a polycarbonate resin composition and a molded body thereof.

Background Art

Polycarbonate resin is excellent in impact resistance, heat resistance, and the like as a general-purpose engineering plastic, and therefore is used in members for automobiles, members for OA equipment, electrical and electronic members, and the like. While the polycarbonate resin has these excellent properties, the polycarbonate resin has inferior surface hardness and weatherability. As a method of improving surface hardness, fluidity, and weatherability while maintaining impact resistance and heat resistance, PTLs 1 and 2 disclose methods of compositing a (meth)acrylic resin and a composite rubber-based graft copolymer to a polycarbonate resin.

Citation List

Patent Literature

PTL 1: Japanese Patent Laid-Open No. 08-269314
PTL 2: National Publication of International Patent Application No. 2010-529248

Summary of Invention

Technical Problem

While the polycarbonate resin composition described in PTL 1 exhibits improved impact resistance and weatherability, the polycarbonate resin composition still has poor fluidity and surface hardness. The polycarbonate resin composition described in PTL 2 has excellent impact resistance and fluidity, but has poor surface hardness. Accordingly, an object of the present invention is to provide a polycarbonate resin composition having good impact resistance and also having excellent fluidity and surface hardness.

Solution to Problem

To solve the problems above, the present invention provides the following [1] to [16].

[1] A polycarbonate resin composition, comprising a polycarbonate resin (A); a poly(methyl methacrylate) (B); and a rubber-containing graft polymer (C) comprising a vinyl monomer grafted to a rubbery polymer,
wherein the poly(methyl methacrylate) (B) comprises 85 to 100 mass% of a methyl methacrylate unit, and
a value defined by the following expression, B/C, is 2.0 to 15.0:

$$B/C = \text{parts by mass of poly(methyl methacrylate) (B)}$$

$$/ \text{ parts by mass of rubber-containing graft polymer (C)}.$$

[2] The polycarbonate resin composition according to [1], wherein the rubber-containing graft polymer (C) comprises 50 to 99 mass% of the rubbery polymer based on the total mass of the rubber-containing graft polymer (C).
[3] The polycarbonate resin composition according to [1] or [2], wherein the rubbery polymer contained in the rubber-containing graft polymer (C) is one or more selected from the group consisting of a diene rubber, a diene-acrylic composite rubber, an acrylic rubber, a silicone rubber, and an acrylic-silicone composite rubber.
[4] The polycarbonate resin composition according to [3], wherein the rubbery polymer contained in the rubber-containing graft polymer (C) is one or more selected from the group consisting of an acrylic rubber, a silicone rubber, and an acrylic-silicone composite rubber.
[5] The polycarbonate resin composition according to any one of [1] to [4], wherein a grafted portion of the rubber-containing graft polymer (C) comprises 50 to 100 mass% of a methyl methacrylate unit based on the total mass of the grafted portion.

[6] The polycarbonate resin composition according to any one of [1] to [5], wherein the poly(methyl methacrylate) (B) has a mass average molecular weight of 1,000 to 50,000.

[7] The polycarbonate resin composition according to [6], wherein the poly(methyl methacrylate) (B) has a mass average molecular weight of 15,000 to 40,000.

[8] The polycarbonate resin composition according to [1] to [7], wherein a content of the poly(methyl methacrylate) (B) is 10 to 40 mass% based on a total content rate of the polycarbonate resin (A) and the poly(methyl methacrylate) (B) of 100 mass%.

[9] The polycarbonate resin composition according to [8], wherein a content of the poly(methyl methacrylate) (B) is 15 to 30 mass% based on a total content rate of the polycarbonate resin (A) and the poly(methyl methacrylate) (B) of 100 mass%.

[10] The polycarbonate resin composition according to any one of [1] to [9], wherein a content of the rubber-containing graft polymer (C) is 3 to 14 parts by mass based on a total content of the polycarbonate resin (A) and the poly(methyl methacrylate) (B) of 100 parts by mass.

[11] The polycarbonate resin composition according to [10], wherein a content of the rubber-containing graft polymer (C) is 3 to 7 parts by mass based on a total content of the polycarbonate resin (A) and the poly(methyl methacrylate) (B) of 100 parts by mass.

[12] The polycarbonate resin composition according to any one of [1] to [11], wherein the B/C is 2.5 to 10.0.

[13] The polycarbonate resin composition according to any one of [1] to [12], wherein the polycarbonate resin (A) is an aromatic polycarbonate resin.

[14] A molded body prepared by molding the polycarbonate resin composition according to any one of [1] to [13].

[15] The molded body according to [14], wherein the molded body is an automobile interior or housing.

[16] A polycarbonate resin composition, comprising: a polycarbonate resin (A) and a rubber-containing graft polymer (C) comprising a vinyl monomer graft-polymerized to a vinyl polymer and a rubbery polymer,

wherein the vinyl polymer comprises 85 to 100 mass% in total of one or more selected from the group consisting of a vinyl cyanide monomer unit, an aromatic vinyl monomer unit, and a (meth)acrylate unit, and

the resin composition satisfies the following conditions 1 to 4:

condition 1:
a total light transmittance obtained by measuring a molded body having a thickness of 2 mm according to JIS K7361-1 is 10 to 40%;
condition 2:
a pencil hardness obtained by measuring a molded body having a thickness of 2 mm according to JIS K5600-5-4 is HB or higher;
condition 3:
a notched Charpy impact strength obtained by measuring a molded body having a thickness of 4 mm at 23°C according to JIS K7111 is 20 to 90 kJ/m$^2$; and condition 4:
a melt mass-flow rate measured at a temperature of 280°C under a load of 5 kgf according to ISO1133 is 30 to 90 g/10 min.

Advantageous Effects of Invention

The present invention provides a polycarbonate resin composition having good impact resistance and also having excellent fluidity and surface hardness.

Description of Embodiment

A suitable embodiment for implementing the present invention will now be described.

The definitions of the following terms are used through this specification and Claims.

The term "mass average molecular weight" indicates a mass average molecular weight in terms of polystyrene measured by gel permeation chromatography (GPC).

The term "(meth)acrylate" is a generic name for acrylates and methacrylates.

The polycarbonate resin composition according to the present invention comprises a polycarbonate resin (A); a poly(methyl methacrylate) (B); and a rubber-containing graft polymer (C) comprising a vinyl monomer grafted to a rubbery polymer.

In another aspect, the polycarbonate resin composition according to the present invention is a polycarbonate resin composition comprising: a polycarbonate resin (A) and a rubber-containing graft polymer (C) comprising a vinyl monomer graft-polymerized to a vinyl polymer and a rubbery polymer. These will be sequentially described below.

(Polycarbonate resin (A))

The polycarbonate resin (A) may be any high-molecular compound whose main chain has a carbonate ester bond (-O-C(=O)-O-) without limitation.

Examples of the polycarbonate resin (A) usually include aromatic polycarbonates prepared through a reaction of a dihydric phenol with a carbonate precursor. Specifically, examples of the polycarbonate resin (A) include those prepared through a reaction of a dihydric phenol with a carbonate precursor by a solution method or a melting method. More specifically, examples thereof include those prepared by reacting a dihydric phenol to phosgene, and those prepared through a reaction of a dihydric phenol with diphenyl carbonate through transesterification.

Examples of the dihydric phenol include 2,2-bis(4-hydroxyphenyl)propane [bisphenol A], 2,2-bis(3-methyl-4-hydroxyphenyl)propane, 2,2-bis(3,3-dimethyl-4-hydroxyphenyl)propane, bis(4-hydroxyphenyl)methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl) oxide, bis(4-hydroxyphenyl) sulfide, bis(4-hydroxyphenyl)sulfone, bis(4-hydroxyphenyl) sulfoxide, bis(4-hydroxyphenyl) ether, bis(4-hydroxyphenyl) ketone, or halogen substitutes thereof. Besides, examples of the dihydric phenol include hydroquinone, resorcin, and catechol.

From the viewpoint of cost, preferred dihydric phenols are bis(hydroxyphenyl)alkanes. Particularly preferred is bisphenol A.

These dihydric phenols may be used singly or in combinations of two or more.

Examples of the carbonate precursor include carbonyl halides, carbonyl esters, and haloformates. Specifically, examples thereof include phosgene, dihaloformates of dihydric phenols, diphenyl carbonate, dimethyl carbonate, and diethyl carbonate.

These carbonate precursors may be used singly or in combinations of two or more.

The polycarbonate resin (A) may have a branched structure. Examples of branching agents for introducing a branched structure into the polycarbonate resin (A) include 1,1,1-tris(4-hydroxyphenyl)ethane, $\alpha,\alpha'$, $\alpha''$-tris(4-hydroxyphenyl)-1,3,5-triisopropylbenzene, fluoroglycine, trimellitic acid, and isatin bis(o-cresol) .

The polycarbonate resin (A) may be a copolymer including a polycarbonate moiety and a polyorganosiloxane moiety, or may be a polycarbonate resin comprising this copolymer.

The polycarbonate resin (A) may be a polyester-polycarbonate resin obtained by reacting a dihydric phenol to a carbonate precursor in the presence of an ester precursor (a bifunctional carboxylic acid (such as terephthalic acid) or an ester-forming derivative thereof).

The polycarbonate resin (A) may be a mixture of a variety of polycarbonate resins.

To control the molecular weight, phenol, p-t-butylphenol, p-t-octylphenol, or p-cumylphenol, for example, may be used during preparation of the polycarbonate resin (A).

The viscosity-average molecular weight of the polycarbonate resin (A) can be calculated by a viscosity method. The viscosity-average molecular weight is preferably 15,000 to 30,000, more preferably 17,000 to 25,000. A viscosity-average molecular weight within this range tends to provide a polycarbonate resin composition having excellent molding properties. In the viscosity method, using methylene chloride as a solvent, the measurement is performed at 25.0°C with an Ubbelohde viscometer.

The polycarbonate resin (A) is preferably an aromatic polycarbonate resin because the molded body of the aromatic polycarbonate resin has excellent transparency.

(Poly(methyl methacrylate) (B))

The poly(methyl methacrylate) (B) comprises 85 to 100 mass% of a constitutional unit (b1) derived from methyl methacrylate. The poly(methyl methacrylate) (B) comprises preferably 90 to 100 mass%, more preferably 95 to 99 mass% of the constitutional unit (b1) derived from methyl methacrylate in 100 mass% in total of the constitutional units in the poly(methyl methacrylate) (B) because the polycarbonate resin composition tends to have improved impact resistance and heat resistance.

The poly(methyl methacrylate) (B) may comprise a constitutional unit (b2) derived from a different monomer.

Examples of the different monomer forming the constitutional unit (b2) derived from the different monomer can include (meth)acrylate monomers such as methyl acrylate, ethyl (meth)acrylate, butyl (meth)acrylate, 2-ethylhexyl (meth)acrylate, cyclohexyl (meth)acrylate, phenyl (meth)acrylate, naphthyl (meth)acrylate, and lauryl (meth)acrylate; aromatic vinyl monomers such as styrene, $\alpha$-methylstyrene, p-methylstyrene, o-methylstyrene, t-butylstyrene, o-ethylstyrene, p-chlorostyrene, o-chlorostyrene, 2,4-dichlorostyrene, p-methoxystyrene, o-methoxystyrene, and 2,4-dimethylstyrene; vinyl cyanide monomers such as acrylonitriles and methacrylonitriles; $\alpha,\beta$-unsaturated carboxylic acids such as maleic anhydride; maleimide monomers such as N-phenylmaleimide, N-methylmaleimide, and N-cyclohexylmaleimide; glycidyl group-containing monomers such as glycidyl methacrylate; vinyl ether monomers such as vinyl methyl ether and vinyl ethyl ether; vinyl carboxylate monomers such as vinyl acetate and vinyl butyrate; olefin monomers such as ethylene, propylene, and isobutylene; and diene monomers such as butadiene, isoprene, and dimethylbutadiene. Among these monomers listed above, preferred are acrylates, and more preferred are methyl acrylate, ethyl acrylate, propyl acrylate, and butyl acrylate from the viewpoint of excellent heat resistance of the molded body. These monomers can be used singly or as a mixture of two or more.

The poly(methyl methacrylate) (B) comprises preferably 0 to 20 mass%, more preferably 0 to 10 mass%, still more preferably 1 to 5 mass% of the constitutional unit (b2) derived from the different monomer in 100 mass% in total of the constitutional units in the poly(methyl methacrylate) (B) because the molded body thereof tends to have improved heat resistance.

The poly(methyl methacrylate) (B) has a mass average molecular weight of 1,000 to 50,000, preferably 10,000 to 50,000, more preferably 15,000 to 40,000, still more preferably 20,000 to 35,000. A mass average molecular weight of 1,000 or more tends to improve the impact resistance of the polycarbonate resin composition. A mass average molecular weight of 50,000 or less tends to improve the fluidity and transparency of the polycarbonate resin composition.

Examples of the method of preparing the methyl methacrylate resin (B) can include known methods such as suspension polymerization, solution polymerization, emulsion polymerization, and bulk polymerization. Preferred are suspension polymerization and emulsion polymerization because the recovery is easy, and the product is recovered in a particulate form, facilitating melt kneading with other resins.

(Rubber-containing graft polymer (C))

Containing the rubber-containing graft polymer (C) in the polycarbonate resin composition according to the present invention tends to improve the impact resistance of the polycarbonate resin composition.

The rubber-containing graft polymer (C) is prepared by grafting a vinyl monomer (c2) to a rubbery polymer (C1).

(Rubbery polymer (C1))

For example, the rubbery polymer (C1) is one or more selected from the group consisting of a diene rubber, a diene-acrylic composite rubber, an acrylic rubber, a silicone rubber, and an acrylic-silicone composite rubber. The rubbery polymer (C1) is preferably one or more selected from the group consisting of an acrylic rubber, a silicone rubber, and an acrylic-silicone composite rubber because of their excellent weatherability.

The rubbery polymer (C1) contained in the rubber-containing graft polymer (C) is preferably 50 to 99 mass% based on the total mass of the rubber-containing graft polymer (C).

Examples of rubbery polymers which can be used as the rubbery polymer (C1) include, but are not limited to, a polydiene rubbery polymer (C1-1), a polyalkyl (meth)acrylate rubbery polymer (C1-2), and a polyorganosiloxane rubbery polymer (C1-3) described below.

(Polydiene rubbery polymer (C1-1))

The polydiene rubbery polymer (C1-1) comprises a constitutional unit derived from a diene monomer. The polydiene rubbery polymer (C1-1) may also comprise a constitutional unit derived from a different monomer as needed. In particular, the polydiene rubbery polymer (C1-1) is preferably a polymer comprising a constitutional unit having a glass transition temperature of -20°C or less. These constitutional units can be used singly or in combinations of two or more.

Examples of a diene monomer forming a constitutional unit derived from a diene monomer include, but are not limited to, diene monomers such as butadiene and isoprene, such as 1,3-butadiene.

Examples of the different monomer forming the constitutional unit derived from the different monomer include monofunctional monomers such as methyl (meth)acrylate, ethyl (meth)acrylate, butyl (meth)acrylate, 2-ethylhexyl (meth)acrylate, lauryl (meth)acrylate, stearyl acrylate, t-butyl acrylate, styrene, and acrylonitrile; and polyfunctional monomers such as divinylbenzene, ethylene glycol dimethacrylate, butylene glycol diacrylate, triallyl cyanurate, triallyl isocyanurate, trimethylolpropane triacrylate, and pentaerythritol tetraacrylate. These monomers may be used singly or in combinations of two or more. Among these monomers, preferred are alkyl acrylates having an alkyl group having 2 to 8 carbon atoms and/or styrene, more preferred are alkyl acrylate having an alkyl group having 3 to 6 carbon atoms and/or styrene, and particularly preferred are butyl acrylate and/or styrene from the viewpoint of the polymerization stability of emulsion polymerization.

Where all the monomer units forming the polydiene rubbery polymer (C1-1) is 100 mass%, the polydiene rubbery polymer (C1-1) comprises preferably 70 mass% or more, more preferably 80 mass% or more, still more preferably 90 mass% or more of the constitutional unit derived from the diene monomer. Comprising 70 mass% or more of the constitutional unit derived from the diene monomer tends to improve the impact resistance of the polycarbonate resin composition.

(Polyalkyl (meth)acrylate rubbery polymer (C1-2))

The polyalkyl (meth)acrylate rubbery polymer (C1-2) comprises a constitutional unit derived from an alkyl (meth)acrylate monomer. The polyalkyl (meth)acrylate rubbery polymer (C1-2) may also comprise a constitutional unit derived from a different monomer as needed. In particular, the polyalkyl (meth)acrylate rubbery polymer (C1-2) is preferably a polymer comprising a constitutional unit having a glass transition temperature of -20°C or less. These constitutional units can be used singly or in combinations of two or more.

Examples of the alkyl (meth)acrylate monomer forming the constitutional unit derived from the alkyl (meth)acrylate monomer include, but are not limited to, methyl (meth)acrylate, ethyl (meth)acrylate, butyl (meth)acrylate, 2-ethylhexyl (meth)acrylate, lauryl (meth)acrylate, stearyl acrylate, and t-butyl acrylate. These monomers may be used singly or in combinations of two or more. Among these monomers, preferred are alkyl acrylates having an alkyl group having 2 to 8 carbon atoms, and particularly preferred are butyl acrylate and 2-ethylhexyl acrylate from the viewpoint of the polymerization stability of emulsion polymerization.

Examples of the different monomer forming the constitutional unit derived from the different monomer include monofunctional monomers such as styrene and acrylonitrile; and polyfunctional monomers such as allyl (meth)acrylate, divinylbenzene, ethylene glycol dimethacrylate, butylene glycol diacrylate, triallyl cyanurate, triallyl isocyanurate, trimethylolpropane triacrylate, and pentaerythritol tetraacrylate. These monomers may be used singly or in combinations of two or more.

Where all the monomer units forming the polyalkyl (meth)acrylate rubbery polymer (C1-2) is 100 mass%, the polyalkyl (meth)acrylate rubbery polymer (C1-2) comprises preferably 70 mass% or more, more preferably 80 mass% or more, still more preferably 90 mass% or more of the constitutional unit derived from the alkyl (meth)acrylate monomer. Comprising 70 mass% or more of the constitutional unit derived from the alkyl (meth)acrylate monomer tends to improve the impact resistance of the polycarbonate resin composition.

(Polyorganosiloxane rubbery polymer (C1-3))

The polyorganosiloxane rubbery polymer (C1-3) comprises polyorganosiloxane (C1-3-1).

(Polyorganosiloxane (C1-3-1))

The polyorganosiloxane (C1-3-1) is prepared through emulsion polymerization of an organosiloxane mixture comprising organosiloxane, a graft crossing agent for polyorganosiloxane (hereinafter, referred to as "siloxane crossing agent), and optionally a crosslinking agent for polyorganosiloxane (hereinafter, referred to as "siloxane crosslinking agent") and a siloxane oligomer having an end-capping group as needed.

Both of linear organosiloxanes and cyclic organosiloxanes can be used as the organosiloxane. Preferred are cyclic organosiloxanes, which have high polymerization stability and a high polymerization rate. Preferred are cyclic organosiloxanes having a 3- or higher membered ring, and more preferred are cyclic organosiloxanes having a 3 to 6-membered ring. Examples of the cyclic organosiloxanes include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane, and octaphenylcyclotetrasiloxane. These cyclic organosiloxanes may be used singly or in combinations of two or more.

Preferred siloxane crossing agents are those that can bond to the organosiloxane through a siloxane bond to enable formation of a bond to a vinyl monomer, such as a monomer forming a poly(meth)acrylate ester or a vinyl monomer. Such siloxane crossing agents are preferably alkoxysilane compounds having a vinyl group in consideration of the reactivity with the organosiloxane. Use of the siloxane crossing agent can generate polyorganosiloxanes having a functional group polymerizable with any vinyl copolymer. The functional group polymerizable with any vinyl monomer contained in those polyorganosiloxanes enables chemical bonding of the polyorganosiloxanes to a polyalkyl (meth)acrylate ester or a vinyl monomer.

Examples of the siloxane crossing agent can include siloxane represented by Formula (I):

$$RSiR^1{}_n(OR^2)_{(3-n)} \qquad \text{Formula (I)}$$

where $R^1$ represents a methyl group, an ethyl group, a propyl group, or a phenyl group; $R^2$ represents an organic group in an alkoxy group, and examples thereof can include a methyl group, an ethyl group, a propyl group, or a phenyl group; n represents 0, 1, or 2. R represents any one of the groups represented by Formulae (I-1) to (1-4) :

$$CH_2=C(R^3)\text{-}COO\text{-}(CH_2)_p\text{-} \qquad \text{Formula (1-1),}$$

$$CH_2=C(R^4)-C_6H_4- \qquad \text{Formula (1-2),}$$

$$CH_2=CH- \qquad \text{Formula (1-3),}$$

and

$$HS-(CH_2)_p- \qquad \text{Formula (1-4),}$$

where $R^3$ and $R^4$ each represent hydrogen or a methyl group; and p represents an integer of 1 to 6.

Examples of the functional group represented by Formula (I-1) can include a methacryloyloxyalkyl group. Examples of siloxanes having this group can include β-methacryloyloxyethyldimethoxymethylsilane, γ-methacryloyloxypropylmethoxydimethylsilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane, and δ-methacryloyloxybutyldiethoxymethylsilane.

Examples of the functional group represented by Formula (1-2) can include a vinylphenyl group. Examples of siloxanes having this group include vinylphenylethyldimethoxysilane.

Examples of siloxanes having the functional group represented by Formula (1-3) can include vinyltrimethoxysilane and vinyltriethoxysilane.

Examples of the functional group represented by Formula (1-4) can include a mercaptoalkyl group. Examples of siloxanes having this group can include γ-mercaptopropyldimethoxymethylsilane, γ-mercaptopropylmethoxydimethylsilane, γ-mercaptopropyldiethoxymethylsilane, γ-mercaptopropylethoxydimethylsilane, and γ-mercaptopropyltrimethoxysilane. These siloxane crossing agents may be used singly or in combinations of two or more.

Preferred siloxane crosslinking agents have three or four functional groups which can bond to the organosiloxane. Examples of the siloxane crosslinking agents include trialkoxyalkylsilanes such as trimethoxymethylsilane; trialkoxyarylsilanes such as triethoxyphenylsilane; and tetraalkoxysilanes such as tetramethoxysilane, tetraethoxysilane, tetra-n-propoxysilane, and tetrabutoxysilane. These may be used singly or in combinations of two or more. Among these, tetraalkoxysilanes are preferred, and tetraethoxysilanes are more preferred.

The siloxane oligomer having an end-capping group indicates a siloxane oligomer which is an organosiloxane oligomer having (a) terminal alkyl group(s) to terminate polymerization of polyorganosiloxane.

Examples of the siloxane oligomer having an end-capping group include hexamethyldisiloxane, 1,3-bis(3-glycidoxypropyl)tetramethyldisiloxane, 1,3-bis(3-aminopropyl)tetramethyldisiloxane, and methoxytrimethylsilane.

The content rate of organosiloxane in the organosiloxane mixture (100 mass%) is within the range of preferably 60 to 99.9 mass%, more preferably 70 to 99.9 mass%. The content rate of the siloxane crossing agent in the organosiloxane mixture (100 mass%) is preferably within the range of 0.1 to 10 mass%. The content rate of the siloxane crosslinking agent in the organosiloxane mixture (100 mass%) is preferably within the range of 0 to 30 mass%.

(Polyorganosiloxane composite rubber (C1-3-2))

The polyorganosiloxane rubbery polymer (C1-3) according to the present invention may be a polyorganosiloxane composite rubber (C1-3-2) comprising the polyorganosiloxane (C1-3-1) and a vinyl polymer for a composite rubber.

The vinyl polymer for a composite rubber is prepared by polymerizing a vinyl monomer for a composite rubber with a crosslinkable monomer or an acrylic crossing agent as needed.

Examples of the vinyl monomer for a composite rubber include alkyl acrylates such as methyl acrylate, ethyl acrylate, n-propyl acrylate, and n-butyl acrylate; alkyl methacrylates such as methyl methacrylate, ethyl methacrylate, n-propyl methacrylate, n-butyl methacrylate, and i-butyl methacrylate; aromatic vinyl monomers such as styrene and α-methylstyrene; and vinyl cyanide monomers such as acrylonitrile and methacrylonitrile. A preferred vinyl monomer for a composite rubber is n-butyl acrylate because the resulting molded body has excellent impact resistance.

The crosslinkable monomer is a polyfunctional monomer having two or more polymerizable unsaturated bonds. Examples thereof include allyl methacrylate, triallyl cyanurate, triallyl isocyanurate, divinylbenzene, ethylene glycol dimethacrylate, propylene glycol dimethacrylate, 1,3-butylene glycol dimethacrylate, 1,4-butylene glycol dimethacrylate, 1,6-hexanediol diacrylate, and triallyl trimellitate. These crosslinkable monomers can be used singly or in combinations of two or more.

The acrylic crossing agent is a polyfunctional monomer having two or more polymerizable unsaturated bonds different in reactivity. By having a group different in reactivity, when such a polyfunctional monomer is polymerized with other components, the polyfunctional monomer can be incorporated into the composite rubber in the state where the unsaturated groups of the polyfunctional monomer remain intact, forming a graft copolymer. Examples of the acrylic crossing agent include allyl methacrylate, triallyl cyanurate, and triallyl isocyanurate. These can be used singly or in combinations of two or more. The acrylic crossing agent also has a function as a crosslinking agent because the acrylic crossing agent has two or more polymerizable unsaturated bonds as in the crosslinkable monomer.

The content of the crosslinkable monomer is preferably 0 to 15 parts, more preferably 0.1 to 10 parts per 100 parts by mass of the vinyl monomer for a composite rubber. Comprising 15 parts or less of the crosslinkable monomer tends to provide a molded body having excellent impact resistance.

The content of the acrylic crossing agent is preferably 0 to 15 parts, more preferably 0.1 to 10 parts per 100 parts by mass of the vinyl monomer for a composite rubber. Comprising 15 parts or less of the crosslinkable monomer tends to provide a molded body having excellent impact resistance.

The content rate of the polyorganosiloxane (C1-3-1) in 100 mass% of the polyorganosiloxane composite rubber (C1-3-2) is preferably 0.1 to 99.9 mass%, more preferably 5 mass% or more, still more preferably 7 mass% or more. A content rate of the polyorganosiloxane of 0.1 mass% or more tends to provide excellent impact resistance. A content rate of the polyorganosiloxane of 99.9 mass% or less tends to provide excellent heat resistance.

(Vinyl monomer (c2))

Examples of the vinyl monomer (c2) include methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ethylhexyl (meth)acrylate, styrene, $\alpha$-methylstyrene, vinyltoluene, chlorostyrene, acrylonitrile, and methacrylonitrile. These vinyl monomers may be used singly or in combinations of two or more.

A preferred vinyl monomer (c2) is acrylonitrile, methyl (meth)acrylate, and styrene because the resulting polycarbonate resin composition tends to have excellent heat resistance. The vinyl monomer (c2) comprises preferably 50 to 100 mass% of methyl methacrylate, more preferably 70 to 100 mass%, still more preferably 90 to 100 mass% because such a vinyl monomer has excellent miscibility with the polycarbonate resin (A) and the resulting polycarbonate resin composition tends to have excellent impact resistance.

<Method of preparing rubber-containing graft polymer (C)>

The rubber-containing graft polymer (C) is prepared by grafting the vinyl monomer (c2) to the rubbery polymer (C1).

Any method for graft polymerization can be used without limitation. Preferred is emulsion polymerization because the particle diameter of the rubber-containing graft polymer (C) can be readily controlled to facilitate the formation of the core-shell structure. Examples of usable methods for emulsion polymerization include generally known methods for emulsion polymerization, such as polymerization by adding monomers in batch, polymerization by continuous adding monomers, and multistage polymerization. An emulsifier can also be added by the same method as the method of adding monomers. The graft layer may be a single layer, or two or more layers.

The rubber-containing graft polymer (C) is recovered from a latex of the rubber-containing graft polymer (C) after polymerization through spray drying or coagulation.

Examples of the method of coagulating a latex of the rubber-containing graft polymer (C) include a method of bringing a latex of the rubber-containing graft polymer (C) into contact with hot water having a coagulant dissolved therein, coagulating a polymer under stirring to form a slurry, and dehydrating, washing, and drying the generated precipitate.

<Method of preparing rubbery polymer (C1) >

The rubbery polymer (C1) can be polymerized by any method. Examples thereof include emulsion polymerization and suspension polymerization for aqueous systems, and solution polymerization for solution systems. Preferred is emulsion polymerization because the particle diameter of the rubbery polymer (C1) is readily controlled and rubber particles having a core-shell structure are readily formed.

Emulsifiers which can be used in emulsion polymerization are known anionic emulsifiers, cationic emulsifiers, and nonionic emulsifiers.

Any polymerization initiator can be used in polymerization without limitation. For example, known azo initiators and peroxide initiators can be used. These polymerization initiators may be used singly or in combinations of two or more. The amount of the polymerization initiator to be used is preferably 0.05 to 1.0 part by mass, more preferably 0.1 to 0.3 parts by mass per 100 parts by mass in total of the monomers.

In the present invention, the proportion of the rubbery polymer (C1) contained in the rubber-containing graft polymer (C) can be set at any value. The proportion of the rubbery polymer (C1) is preferably 50 to 90 mass% in 100 mass% of the rubber-containing graft polymer (C). A proportion of 50 mass% or more tends to improve the impact resistance of the polycarbonate resin composition.

In the present invention, the grafted portion of the rubber-containing graft polymer (C) comprises preferably 50 to 100 mass% of a methyl methacrylate unit, more preferably 70 to 100 mass%, still more preferably 90 to 100 mass% based on the total mass of the grafted portion. The methyl methacrylate unit in the range of 50 to 100 mass% is preferred because such a methyl methacrylate unit tends to provide a rubber-containing graft polymer (C) having excellent miscibility with the polycarbonate resin (A) and the resulting polycarbonate resin composition tends to have excellent impact resistance.

Examples of the rubber-containing graft polymer (C) which can be suitably used include METABLEN S-2001, METABLEN S-2100, METABLEN SRK-200, METABLEN S-2030, METABLEN E-870, and METABLEN E-875 made by Mitsubishi Chemical Corporation.

(Polycarbonate resin composition)

The polycarbonate resin composition according to the present invention comprises the polycarbonate resin (A), the poly(methyl methacrylate) (B), and the rubber-containing graft polymer (C). The polycarbonate resin composition according to the present invention may comprise components other than the polycarbonate resin (A), the poly(methyl methacrylate) (B), and the rubber-containing graft polymer (C) as needed.

(Other components)

The polycarbonate resin composition according to the present invention may comprise a variety of additives (such as antioxidants, ultraviolet absorbing agents, light stabilizers, nucleophiles, lubricants, and flame retardants), and a variety of fillers (such as glass, mica, and rubber particles) as needed.

In the polycarbonate resin composition according to the present invention, poly(methyl methacrylate) (B) comprises 85 to 100 mass% of the methyl methacrylate unit, and a value defined by the following expression, B/C, is 2.0 to 15.0:

$$\text{B/C = parts by mass of poly(methyl methacrylate) (B)}$$
$$\text{/ parts by mass of rubber-containing graft polymer (C)}$$

The value B/C, which is the ratio of parts by mass of poly(methyl methacrylate) (B) to the parts by mass of rubber-containing graft polymer (C) contained in the polycarbonate resin composition according to the present invention is preferably within the range of 2.0 to 15.0, more preferably 2.5 to 10.0, still more preferably 3.0 to 10.0. A B/C within this range is preferred because the resulting polycarbonate resin composition tends to have high surface hardness.

The polycarbonate resin composition according to the present invention is a polycarbonate resin composition comprising: the polycarbonate resin (A) and the rubber-containing graft polymer (C) comprising a vinyl monomer graft-polymerized to a vinyl polymer and a rubbery polymer,

wherein the vinyl polymer comprises 85 to 100 mass% in total of one or more selected from the group consisting of a vinyl cyanide monomer unit, an aromatic vinyl monomer unit, and a (meth)acrylate unit, and

the resin composition may satisfy the following conditions 1 to 4:

condition 1:
a total light transmittance obtained by measuring a molded body having a thickness of 2 mm according to JIS K7361-1 is 10 to 40%;
condition 2:
a pencil hardness obtained by measuring a molded body having a thickness of 2 mm according to JIS K5600-5-4 is HB or higher;
condition 3:
a notched Charpy impact strength obtained by measuring a molded body having a thickness of 4 mm at 23°C according to JIS K7111 is 20 to 90 kJ/m$^2$; and condition 4:
a melt mass-flow rate measured at a temperature of 280°C under a load of 5 kgf according to ISO1133 is 30 to 90 g/10 min.

It is preferred in viewpoint of the impact resistance that in the polycarbonate resin composition according to the present invention, the vinyl polymer comprise 85 to 100 mass% in total of one or more selected from the group consisting of a vinyl cyanide monomer unit, an aromatic vinyl monomer unit, and a (meth)acrylate unit.

The polycarbonate resin composition according to the present invention is molded into a molded body having a thickness of 2 mm. The molded body has a total light transmittance of 10 to 40%, which is measured according to JIS K7361-1. A total light transmittance within this range is preferred because the molded body has good color developability.

The polycarbonate resin composition according to the present invention is molded into a molded body having a thickness of 2 mm. The molded body has a pencil hardness equal to or higher than HB, which is measured according to JIS K5600-5-4. A pencil hardness within this range is preferred because the molded body has good surface hardness.

The polycarbonate resin composition according to the present invention is molded into a molded body having a thickness of 4 mm. The molded body having a thickness of 4 mm has a notched Charpy impact strength of 20 to 90 kJ/m$^2$, which is measured at 23°C according to JIS K7111. A notched Charpy impact strength within this range is preferred because the molded body has good impact resistance.

The polycarbonate resin composition according to the present invention has a melt mass-flow rate of 30 to 90 g/10 min, which is measured at a temperature of 280°C under a load of 5 kgf according to ISO1133. A melt mass-flow rate within this range is preferred because the polycarbonate resin composition has good fluidity.

(Method of preparing polycarbonate resin composition)

The polycarbonate resin composition according to the present invention can be prepared by melt kneading the polycarbonate resin (A), the poly(methyl methacrylate) (B), the rubber-containing graft polymer (C), and other components as needed.

Examples of melt kneaders include Banbury mixers, kneaders, rolls, kneader extruders, single screw extruders, twin screw extruders, and multi-screw extruders.

(Composition of polycarbonate resin composition)

In the present invention, the content of the poly(methyl methacrylate) (B) is preferably 10 to 40 mass%, more preferably 15 to 30 mass% based on a total content of the polycarbonate resin (A) and poly(methyl methacrylate) (B) of 100 mass%. A content of poly(methyl methacrylate) (B) of 10 mass% or more tends to provide a molded body having excellent surface hardness. A content of poly(methyl methacrylate) (B) of 40 mass% or less tends to provide a molded body having excellent impact resistance.

In the present invention, the content of the rubber-containing graft polymer (C) is preferably 3 to 14 parts by mass, more preferably 3 to 7 parts by mass per 100 parts by mass in total of the polycarbonate resin (A) and the poly(methyl methacrylate) (B). A content of the rubber-containing graft polymer (C) of 3 parts by mass or more tends to provide a molded body having excellent impact resistance. A content of the rubber-containing graft polymer (C) of 14 parts by mass or less tends to provide a polycarbonate resin composition having excellent fluidity.

<Method of producing molded body>

The polycarbonate resin composition according to the present invention can be formed into a molded body by a known method such as injection molding, extrusion, or compression molding. Preferred molding methods are injection molding and extrusion because desired shapes can be molded.

A molded body according to the present invention is useful as members (such as housings) of a variety of apparatuses (electrical apparatuses, OA equipment, mobile phones, and tablet terminals), optical recording media, automobile parts (such as automobile exterior materials and automobile interior materials), construction members, and a variety of sheets. Among these applications, use of the molded body as automobile interiors or housings is preferred because the molded body is readily molded, and the coating step can be eliminated.

Examples

The present invention will now be described by way of Examples. In Examples, the term "parts" indicates "parts by mass". The methods of determining the proportions and mass average molecular weights of the constitutional units of the polymer and the method of evaluating the molded body will be described as below.

(Proportion of constitutional units)

The proportions of the constitutional units of the polymer were calculated from the amounts of the monomers prepared.

(Mass average molecular weight)

An elution profile at 40°C of the polymer dissolved in tetrahydrofuran (THF) was determined with a gel permeation chromatograph (GPC, Tosoh Corporation, HLC8220) provided with four columns (Tosoh Corporation, TSKgel Super-

HZM-M). Based on the calibration curve using a standard polystyrene, the mass average molecular weight of the polymer was calculated.

(Melt mass-flow rate)

The melt mass-flow rate was measured at a temperature of 280°C under a load of 5 kgf according to ISO1133.

(Total light transmittance)

The total light transmittance of a molded body in the form of a sheet having a thickness of 2 mm was measured according to JIS K7361-1.

(Pencil hardness)

The pencil hardness of the surface of a molded body in the form of a sheet having a thickness of 2 mm was measured according to JIS K 5600-5-4.

(Notched Charpy impact strength)

A molded body having a thickness of 4 mm was measured at 23°C according to JIS K7111.

[Production Example 1: synthesis of dispersant (1)]

An aqueous solution (61.6 parts) of 17% potassium hydroxide, Acriester M (methyl methacrylate made by Mitsubishi Chemical Corporation, trade name) (19.1 parts), and deionized water (19.3 parts) were placed into a 1200-L reaction container provided with a stirrer, a cooling tube, and a thermometer. In the next step, the solution within a reactor was stirred at room temperature. After the exothermic peak was checked, the solution was stirred for another 4 hours. Thereafter, the reaction solution within the reactor was cooled to room temperature to prepare an aqueous solution of potassium methacrylate.

In the next step, deionized water (900 parts), Acriester SEM-Na (2-sulfoethylsodium methacrylate made by Mitsubishi Chemical Corporation, trade name, 42 mass% aqueous solution) (60 parts), the aqueous solution (10 parts) of potassium methacrylate, and Acriester M (12 parts) were placed into a 1050-L reaction container provided with a stirrer, a cooling tube, and a thermometer, and were stirred. While the inside of a polymerization apparatus was being purged with nitrogen, the polymerization apparatus was heated to 50°C. A polymerization initiator V-50 (2,2'-azobis(2-methylpropionamidine) dihydrochloride made by Wako Pure Chemical Industries, Ltd., trade name) (0.08 parts) was added to the polymerization apparatus, and was further heated to 60°C. After the heating, Acriester M was continuously added dropwise at a rate of 0.24 parts/min for 75 minutes. After the reaction solution was kept at 60°C for 6 hours, the reaction solution was cooled to room temperature to prepare a dispersant (1), which was a transparent aqueous solution (solid content: 10 mass%).

[Production Example 2: synthesis of polymer (B-1)]

Deionized water (200 parts), sodium sulfate ($Na_2SO_4$) (0.3 parts), and the dispersant (1) prepared in Production Example 1 (solid content: 10 mass%) (0.26 parts) were placed into a polymerization apparatus provided with a stirrer, a cooling tube, and a thermometer, and were stirred to prepare a uniform aqueous solution. In the next step, Acriester M (made by Mitsubishi Chemical Corporation, methyl methacrylate, trade name) (98.5 parts) as a monomer forming a constitutional unit (b1) derived from methyl methacrylate, and methyl acrylate (made by Wako Pure Chemical Industries, Ltd., reagent Super grade) (1.5 parts) as a monomer forming a constitutional unit (b2) derived from a different monomer, a chain transfer agent 1-octylmercaptan (Tokyo Chemical Industry Co., Ltd.) (1 part), and a polymerization initiator AMBN (made by NOF CORPORATION, 2,2-azobis-2-methylbutyronitrile, trade name) (0.3 parts) were added to prepare an aqueous dispersion solution. In the next step, the inside of the polymerization apparatus was sufficiently purged with nitrogen. The aqueous dispersion solution was heated to 75°C, and was kept for 3 hours; then, the aqueous dispersion solution was heated to 85°C, and was kept for 1.5 hours. Subsequently, the reaction solution was cooled to 40°C to prepare an aqueous suspension of the polymer (B-1). This aqueous suspension was filtered through a filter cloth. The resulting product was washed with deionized water, and was dried at 75°C for 18 hours to yield a polymer (B-1).

[Production Examples 3 to 5: synthesis of polymers (B-2) to (B-4)]

Polymers (B-2) to (B-4) were synthesized in the same manner as in Production Example 2 except that the amount of the chain transfer agent 1-octylmercaptan added were varied as shown in "Table 1". The mass average molecular weights of the polymers (B-1) to (B-4) are shown in "Table 1".

[Table 1]

|  |  | Production Example | | | |
|---|---|---|---|---|---|
|  |  | 2 | 3 | 4 | 5 |
| Polymer | | B-1 | B-2 | B-3 | B-4 |
| b1 (parts) | Methyl methacrylate | 98.5 | 98.5 | 98.5 | 98.5 |
| b2 (parts) | Methyl acrylate | 1.5 | 1.5 | 1.5 | 1.5 |
| Chain transfer agent (parts) | 1-Octylmercaptan | 1 | 0.7 | 0.4 | 0.3 |
| Mass average molecular weight | | 24000 | 32000 | 49000 | 72000 |

[Production Example 6: synthesis of polyorganosiloxane (C-1-1)]

A cyclic organosiloxane mixture (manufactured by Shin-Etsu Silicone Co., Ltd., product name: DMC) (97.5 parts), tetraethoxysilane (TEOS) (2 parts), and γ-methacryloyloxyethylpropyldimethoxymethylsilane (DSMA) (0.5 parts) were mixed to prepare an organosiloxane mixture (100 parts). Sodium dodecylbenzenesulfonate (DBSNa) (0.68 parts) and dodecylbenzenesulfonic acid (DBSH) (0.68 parts) were dissolved in deionized water (200 parts) to prepare an aqueous solution, and the aqueous solution was added to the mixture. The aqueous solution was stirred at 10000 rpm for 2 minutes with a homomixer, and was passed through a homogenizer two times under a pressure of 20 MPa to prepare a stable preparative mixed emulsion.

In the next step, the emulsion was placed into a 5L separable flask provided with a cooling condenser. The emulsion was heated to 85°C, and was kept for 6 hours to perform polymerization reaction. The emulsion was then cooled to 25°C, and was kept at room temperature for 12 hours. Subsequently, an aqueous solution of 5% sodium hydroxide was added to neutralize the reaction solution to a pH of 7.0. A latex of the polyorganosiloxane (C-1-1) was thereby yielded.

The solid content in the latex was 28.3%. The latex had a number average particle size (Dn) of 86 nm, a mass average particle size (Dw) of 254 nm, and Dw/Dn of 2.95.

[Production Example 7: synthesis of polyorganosiloxane composite rubber (C-1-2) and rubber-containing graft polymer (C-1)]

The latex of the polyorganosiloxane (C-1-1) yielded in Production Example 6 (9.9 parts in terms of the polymer) was placed into a 5L separable flask, and deionized water (100 parts) was added to and mixed with the latex. In the next step, a mixture of n-butyl acrylate (n-BA) (77.5 parts), allyl methacrylate (AMA) (1.6 parts), and tert-butyl hydroperoxide (t-BH) (0.25 parts) was placed to the separable flask.

The inner atmosphere of the flask was purged with nitrogen by passing a nitrogen stream through the separable flask, and the solution was heated to 50°C. At the point of time when the temperature of the solution reached 50°C, an aqueous solution of ferrous sulfate (Fe) (0.001 parts), disodium ethylenediaminetetraacetate (EDTA) (0.003 parts), and sodium formaldehyde sulfoxylate (SFS) (0.3 parts) dissolved in deionized water (2.5 parts) was added to initiate radical polymerization. To complete the polymerization of the acrylate components, the solution was kept at 65°C for one hour to yield a latex of a composite rubber (C-1-2) of polyorganosiloxane and n-BA.

In the state where the temperature of the latex of the composite rubber was kept at 65°C, a mixed solution of methyl methacrylate (MMA) (11 parts) and t-BH (0.03 parts) was added dropwise into the latex over 1.5 hours to perform polymerization. After the end of the dropwise addition, the solution was kept at a temperature of 65°C for 1 hour, and was then cooled to 25°C to yield a latex of a rubber-containing graft polymer (C-1).

In the next step, an aqueous solution (500 parts) of 1 mass% calcium acetate was kept at a temperature of 30°C, and the latex (300 parts) of the rubber-containing graft polymer (C-1) was gradually added dropwise to the aqueous solution under stirring to coagulate the latex. The resulting rubber-containing graft polymer (C-1) was filtered out, and was dehydrated. Furthermore, water 10 times as much as the rubber-containing graft polymer (C-1) (100 parts) was added, and the rubber-containing graft polymer (C-1) was washed for 10 minutes in a flask provided with a stirrer, followed by filtration and dehydration. This operation was repeated two times, and the product was dried to yield a powder of the rubber-containing graft polymer (C-1).

[Production Example 8: synthesis of polyorganosiloxane (C-2-1)]

Tetraethoxysilane (TEOS) (2 parts), γ-methacryloyloxyethylpropyldimethoxymethylsilane (DSMA) (2 parts), and octamethylcyclotetrasiloxane (made by Momentive Performance Materials Japan LLC, product name: TSF404) (96 parts) were mixed to prepare an organosiloxane mixture (100 parts). An aqueous solution of sodium dodecylbenzenesulfonate (DBSNa) (1 part) dissolved in deionized water (150 parts) was added to the mixture, and was stirred at 10,000 rpm for 5 minutes with a homomixer. The mixture was passed through a homogenizer under a pressure of 20 MPa two times to prepare a stable preparative mixed emulsion.
In the next step, the emulsion was placed into a 5 liter separable flask provided with a cooling condenser. The emulsion was heated to a temperature of 80°C, and then a mixture of sulfuric acid (0.20 parts) and distilled water (49.8 parts) was continuously added over 3 minutes. The emulsion was heated to a temperature of 80°C, and the state was kept for 7 hours to perform polymerization reaction. The emulsion was cooled to room temperature (25°C), and the resulting reaction solution was kept at room temperature for 6 hours. Subsequently, an aqueous solution of 5% sodium hydroxide was added to neutralize the reaction solution to a pH of 7.0 to yield a latex (C-2-1) of polyorganosiloxane rubber.
The solid content in the latex was 29.8%. The latex has a number average particle size (Dn) of 384 nm, a mass average particle size (Dw) of 403 nm, and Dw/Dn of 1.05.

[Production Example 9: synthesis of polyorganosiloxane composite rubber (C-2-2) and rubber-containing graft polymer (C-2)]

The latex (C-2-1) (29.5 parts in terms of polymer) of polyorganosiloxane rubber yielded in Production Example 8 was placed into a 5 liter separable flask, and deionized water (100 parts) was added to and mixed with the latex. In the next step, a mixture of n-butyl acrylate (n-BA) (58.9 parts), allyl methacrylate (AMA) (1.8 parts), and tert-butyl hydroperoxide (t-BH) (0.25 parts) was added into the separable flask.
The inner atmosphere of the flask was purged with nitrogen by passing a nitrogen stream through the separable flask, and the solution was heated to 50°C. At the point of time when the temperature of the solution reached 50°C, an aqueous solution of ferrous sulfate (Fe) (0.001 parts), disodium ethylenediaminetetraacetate (EDTA) (0.003 parts), and sodium formaldehyde sulfoxylate (SFS) (0.3 parts) dissolved in deionized water (2.5 parts) was added to initiate radical polymerization. To complete the polymerization of the acrylate components, the solution was kept at 65°C for one hour to yield a latex (C-2-2) of a composite rubber of polyorganosiloxane and poly(n-butyl acrylate).
In the state where the latex (C-2-2) of the composite rubber was kept at a temperature of 65°C, a mixed solution of St (4.9 parts), MMA (4.7 parts), n-BA (0.2 parts), and t-BH (0.03 parts) was added dropwise into the latex over 1.5 hours to perform polymerization. After the end of the addition, the solution was kept at a temperature of 65°C for one hour, and was then cooled to 25°C to yield a latex of a rubber-containing graft polymer (C-2).
In the next step, coagulation was performed in the same manner as in Production Example 7 to yield a powder of a rubber-containing graft polymer (C-2).

[Production Example 10: synthesis of butadiene rubber latex (C-3-1)]

1,3-Butadiene (100 parts by mass), t-dodecylmercaptan (0.4 parts by mass), mixed potassium fatty acids (made by NOF CORPORATION, trade name: NONSOUL TK-1) (1.25 parts by mass), potassium rosin acid (made by Toho Chemical Industry, Co., Ltd., trade name: Diprosin) (1.25 parts), diisopropylbenzene hydroperoxide (0.24 parts), and deionized water (200 parts) were placed into an autoclave, and were heated. At a point of time when the temperature reached 43°C, a redox initiator composed of Fe (0.003 parts), dextrose (0.3 parts), sodium pyrophosphate (0.3 parts), and deionized water (5 parts) was added into the autoclave to initiate polymerization; and then the temperature was further raised to 60°C. The materials were reacted for 8 hours from the start of polymerization to yield a rubber latex (C-3-1).

[Production Example 11: synthesis of acid group-containing copolymer latex (K-1)]

Fe (0.003 parts), EDTA (0.009 parts), SFS (0.3 parts), potassium tallowate (1.73 parts), sodium dialkylsulfosuccinate (2.5 parts), and deionized water (200 parts) were placed into a reaction container, and the inner temperature was raised to 60°C. A mixture composed of n-BA (85 parts), methacrylic acid (15 parts), and cumene hydroperoxide (0.5 parts) was continuously added dropwise over two hours to perform polymerization. Stirring was continued for another 2 hours to yield an acid group-containing copolymer latex (K-1).

[Production Example 12: synthesis of enlarged rubber latex (C-3-2)]

The rubber latex (C-3-1) (100 parts by mass in terms of the polymer solid content) was placed into a reaction container. The acid group-containing copolymer latex (K-1) (2 parts by mass in terms of the polymer solid content) was added thereto at an inner temperature of 50°C. The system was kept for 30 minutes to enlarge the rubbery polymer in the rubber latex (C-3-1). In the next step, dipotassium alkenylsuccinate (made by Kao Corporation, trade name: LATEMUL ASK) (0.4 parts as the solid content) was added to stabilize the reaction product to yield an enlarged rubber latex (C-3-2).

[Production Example 13: synthesis of rubber-containing graft polymer (C-3)]

The rubber latex (C-3-2) (75 parts as the polymer solid content) was placed into a reaction container, and the inner temperature was raised to 70°C. An aqueous solution of SFS (0.3 parts) dissolved in deionized water (10 parts) was then added thereto. While the inner temperature was being kept at 70°C, the following mixture was added dropwise over 30 minutes. The system was kept for 40 minutes to perform first graft polymerization.

| MMA | 9 parts |
| n-BA | 1 part |
| t-BH | 0.038 parts |

In the next step, the following mixture was added dropwise over 30 minutes. The system was then kept for 60 minutes to perform second graft polymerization.

| styrene | 12.5 parts |
| t-BH | 0.047 parts |

In the next step, the following mixture was added dropwise over 10 minutes. The system was then kept for 120 minutes to perform third graft polymerization to yield a rubber-containing graft polymer latex (C-3).

| MMA | 2.5 parts |
| t-BH | 0.0094 parts |

A phenol antioxidant Irg 245 (0.25 parts) and a thioether antioxidant DLTDP (0.75 parts by mass) were added to the resulting rubber-containing graft polymer latex. The rubber-containing graft polymer latex was added to deionized water (460 parts by mass) containing calcium acetate (5 parts by mass) to coagulate the polymerized product. The product was washed with deionized water, followed by dehydration and drying to yield a powder of a rubber-containing graft polymer (C-3).

[Rubber-containing graft polymer (C-4)]

A rubber-containing graft polymer (made by UMG ABS, trade name: EX18A) composed of a core formed of a butadiene rubber and a shell formed of a styrene unit and an acrylonitrile unit was used as a rubber-containing graft polymer (C-4).

[Example 1]

5.3 parts of the rubber-containing graft polymer (C-1) prepared in Production Example 7 as the rubber-containing graft polymer (C) was placed in a polyethylene bag per 100 parts in total: 74 parts of Iupilon S-2000F (made by Mitsubishi Engineering-Plastics Corporation (aromatic polycarbonate, viscosity-average molecular weight: 23,000) as the polycarbonate resin (A) and 26 parts of the poly(methyl methacrylate) (B) as the polymer (B-3). The contents in the polyethylene bag were hand mixed by sufficiently shaking the polyethylene bag with a hand. The mixture was melt kneaded at 280°C with a twin screw extruder (made by Ikegai Corp., trade name: PCM30). The extruded strands were cut into pellets to produce pellets.

The pellets were molded at a molding temperature of 280°C and a metal mold temperature of 80°C using an injection molding machine (made by Sumitomo Heavy Industries, Ltd., SE100DU) to produce sheet-shaped molded bodies each having a thickness according to the evaluations. The results of evaluation are shown in "Table 2".

These molded bodies had quite excellent melt mass-flow rate and pencil hardness. The molded bodies also had good Charpy impact strength.

[Table 2]

| | | | Example | | | | | | | | | | Comparative Example | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Compounding (parts by mass) | Polycarbonate resin (A) | | 74 | 79 | 79 | 79 | 79 | 79 | 79 | 79 | 79 | 79 | 76 | 86 |
| | Poly(methyl methacrylate) (B) | Polymer (B-1) Mass average molecular weight 24000 | | 21 | | | 21 | | | 21 | | | | |
| | | Polymer (B-2) Mass average molecular weight 32000 | | | 21 | | | 21 | | | 21 | | | 14 |
| | | Polymer (B-3) Mass average molecular weight 49000 | 26 | | | 21 | | | 21 | | | 21 | | |
| | | Polymer (B-4) Mass average molecular weight 72000 | | | | | | | | | | | 24 | |
| | Rubbery polymer (C) | C-1 | 5.3 | 5.3 | 5.3 | 5.3 | | | | | | | 18 | |
| | | C-2 | | | | | 5.3 | 5.3 | 5.3 | | | | | |
| | | C-3 | | | | | | | | 5.3 | 5.3 | 5.3 | | 5.3 |
| | | C-4 | | | | | | | | | | | | 2.7 |
| | B/C | | 4.9 | 4.0 | 4.0 | 4.0 | 4.0 | 4.0 | 4.0 | 4.0 | 4.0 | 4.0 | 0.7 | 1.8 |
| Results of evaluation | Melt mass-flow rate (g/10 min) | | 68 | 57 | 53 | 42 | 56 | 53 | 44 | 56 | 50 | 41 | 27 | 39 |
| | Charpy impact strength (kJ/m$^2$) | | 24 | 46 | 50 | 71 | 23 | 29 | 53 | 27 | 53 | 58 | 67 | 59 |
| | Pencil hardness | | F | F | F | F | F | F | HB | F | F | F | B | B |
| | Total light transmittance (%) | | 17 | 19 | 16 | 15 | 27 | 24 | 22 | 27 | 26 | 23 | 9.8 | 36 |

[Examples 2 to 10]

Sheet-shaped molded bodies each having a thickness according to the evaluations were produced in the same manner as in Example 1 except that the types and amounts of the raw materials used in Example 1 were varied as shown in "Table 2". The results of evaluation are shown in "Table 2".

The molded bodies in Examples 1 to 10 all had quite excellent melt mass-flow rate, Charpy impact strength, pencil hardness, and total light transmittance.

[Comparative Examples 1 and 2]

Sheet-shaped molded bodies each having a thickness according to the evaluations were produced in the same manner as in Example 1 except that the types and amounts of the raw materials used in Example 1 were varied as shown in "Table 2". The results of evaluation are shown in "Table 2".

In Comparative Example 1, the melt mass-flow rate was low because the poly(methyl methacrylate) (B) had a high mass average molecular weight. Moreover, the pencil hardness slightly reduced because B/C was less than 2.0. In Comparative Example 2, the pencil hardness reduced because B/C was less than 2.0.

**Claims**

1. A polycarbonate resin composition, comprising: a polycarbonate resin (A) and a rubber-containing graft polymer (C) comprising a vinyl monomer graft-polymerized to a vinyl polymer and a rubbery polymer,
   wherein the vinyl polymer comprises 85 to 100 mass% in total of one or more selected from the group consisting of a vinyl cyanide monomer unit, an aromatic vinyl monomer unit, and a (meth)acrylate unit, and
   the resin composition satisfies the following conditions 1 to 4:

condition 1:

a total light transmittance obtained by measuring a molded body having a thickness of 2 mm according to JIS K7361-1 is 10 to 40%;

condition 2:

a pencil hardness obtained by measuring a molded body having a thickness of 2 mm according to JIS K5600-5-4 is HB or higher;

condition 3:

a notched Charpy impact strength obtained by measuring a molded body having a thickness of 4 mm at 23°C according to JIS K7111 is 20 to 90 kJ/m$^2$; and condition 4:

a melt mass-flow rate measured at a temperature of 280°C under a load of 5 kgf according to ISO1133 is 30 to 90 g/10 min.

Europäisches
Patentamt
European
Patent Office
Office européen
des brevets

# EUROPEAN SEARCH REPORT

Application Number

EP 20 17 4987

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP H08 85749 A (GE PLASTICS JAPAN LTD) 2 April 1996 (1996-04-02) * page 9, paragraph 51 - page 9, paragraph 60; examples 1-2; tables 1,2 * | 1 | INV. C08L69/00 C08L33/12 C08L51/04 |
| A | D. DEBIER ET AL: "Blends of bisphenol a polycarbonate and acrylic polymers. I. A chemical reaction mechanism", JOURNAL OF POLYMER SCIENCE, PART A: POLYMER CHEMISTRY, vol. 33, no. 3, 1 February 1995 (1995-02-01), pages 407-414, XP055604212, US ISSN: 0887-624X, DOI: 10.1002/pola.1995.080330308 * page 408 - page 408 * | 1 | |
| A | JP H11 60930 A (TEIJIN CHEMICALS LTD) 5 March 1999 (1999-03-05) * paragraph [0041] - paragraph [0045]; claim 5; example 3; table 1 * | 1 | TECHNICAL FIELDS SEARCHED (IPC) C09J C08L |
| X | WO 2008/149156 A1 (LUCITE INT UK LTD [GB]; DAVIES MARK [GB]) 11 December 2008 (2008-12-11) * page 29 - page 29; examples 15-16,3, 11; table 1 * | 1 | |
| X | WO 2013/100303 A1 (CHEIL IND INC [KR]; JOO MIN JUNG [KR] ET AL.) 4 July 2013 (2013-07-04) * page 14 - page 15; examples 1-5; tables 1,2 * * paragraph [0001] * * paragraph [0071] * | 1 | |

The present search report has been drawn up for all claims

| Place of search | Date of completion of the search | Examiner |
|---|---|---|
| The Hague | 10 August 2020 | Adigbli, Francis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 733 773 A1

## ANNEX TO THE EUROPEAN SEARCH REPORT
## ON EUROPEAN PATENT APPLICATION NO.

EP 20 17 4987

This annex lists the patent family members relating to the patent documents cited in the above-mentioned European search report.
The members are as contained in the European Patent Office EDP file on
The European Patent Office is in no way liable for these particulars which are merely given for the purpose of information.

10-08-2020

| Patent document cited in search report | | Publication date | Patent family member(s) | | Publication date |
|---|---|---|---|---|---|
| JP H0885749 | A | 02-04-1996 | NONE | | |
| JP H1160930 | A | 05-03-1999 | JP | 3880142 B2 | 14-02-2007 |
| | | | JP | H1160930 A | 05-03-1999 |
| WO 2008149156 | A1 | 11-12-2008 | AU | 2008259522 A1 | 11-12-2008 |
| | | | BR | PI0811491 A2 | 04-11-2014 |
| | | | CA | 2685812 A1 | 11-12-2008 |
| | | | CN | 101679737 A | 24-03-2010 |
| | | | DK | 2155819 T3 | 01-02-2016 |
| | | | EG | 25972 A | 13-11-2012 |
| | | | EP | 2155819 A1 | 24-02-2010 |
| | | | ES | 2564251 T3 | 21-03-2016 |
| | | | HU | E027704 T2 | 28-11-2016 |
| | | | JP | 5781761 B2 | 24-09-2015 |
| | | | JP | 2010529248 A | 26-08-2010 |
| | | | JP | 2015042763 A | 05-03-2015 |
| | | | JP | 2017025343 A | 02-02-2017 |
| | | | KR | 20100018561 A | 17-02-2010 |
| | | | MX | 338998 B | 09-05-2016 |
| | | | MY | 154373 A | 15-06-2015 |
| | | | PL | 2155819 T3 | 29-07-2016 |
| | | | PT | 2155819 E | 01-03-2016 |
| | | | RU | 2009148300 A | 20-07-2011 |
| | | | SG | 182178 A1 | 30-07-2012 |
| | | | SI | 2155819 T1 | 29-04-2016 |
| | | | TW | 200911918 A | 16-03-2009 |
| | | | UA | 100378 C2 | 25-12-2012 |
| | | | US | 2010184906 A1 | 22-07-2010 |
| | | | US | 2015353728 A1 | 10-12-2015 |
| | | | WO | 2008149156 A1 | 11-12-2008 |
| WO 2013100303 | A1 | 04-07-2013 | KR | 20130093791 A | 23-08-2013 |
| | | | WO | 2013100303 A1 | 04-07-2013 |

EPO FORM P0459

For more details about this annex : see Official Journal of the European Patent Office, No. 12/82

**EP 3 733 773 A1**

## REFERENCES CITED IN THE DESCRIPTION

**Patent documents cited in the description**

- JP 8269314 A

- JP 2010529248 A